# EUROPÄISCHE PATENTANMELDUNG

(11) **EP 4 201 764 A1**
(43) Veröffentlichungstag der Anmeldung: **28.06.2023**
(21) Anmeldenummer: 22205854.7
(22) Anmeldetag: 20.03.2017
(51) Int. Cl.: B60T 8/36, B60T 13/14, B60T 17/02

(54) **BETÄTIGUNGSVORRICHTUNG FÜR EIN HYDRAULISCHES BETÄTIGUNGSSYSTEM**

(30) Priorität: 21.03.2016 DE 102016105232
(62) Teilanmeldung aus: 17712743.8
(71) Anmelder: IPGate AG, 8808 Pfäffikon (CH)
(72) Erfinder: LEIBER, Thomas, 22203 Rogoznica (HR); LEIBER, Heinz, 71739 Oberriexingen (DE); Hecker, Carsten, 80335 München (DE)
(74) Vertreter: Meissner Bolte Partnerschaft mbB

(57) **Zusammenfassung**

Betätigungsvorrichtung für ein hydraulisches Betätigungssystem, insbesondere eine Kraftfahrzeugbremse oder einen elektrifizierten Kupplungs- und Gangsteller, folgende Komponenten aufweisend:
- einen Anschluss für eine Betätigungseinrichtung in Form eines Bremspedals oder einer Kupplungsbetätigungseinrichtung,
- eine von einem elektromotorischen Antrieb (M) angetriebene Druckversorgungseinrichtung (11) in Form einer Kolben- oder einer Doppelhubkolbenpumpe, wobei der Antrieb (M) direkt oder über ein Übersetzungsgetriebe, insbesondere ein Kugelumlaufgetriebe, den Kolben der Kolben- bzw. Doppelhubkolbenpumpe verstellt,
- eine mittels der Betätigungseinrichtung betätigbare Kolben-Zylinder-Einheit (10, THZ), die hydraulisch mit einem Druckmittelvorratsbehälter (VB) verbunden ist, und
- eine elektronische Steuer- und Regeleinheit (ECU),
dadurch gekennzeichnet, dass
ein Anschlusselement, insbesondere ein Stecker (1), in einer horizontalen Steckrichtung in die elektronische Steuer- und Regeleinheit (ECU) einsteckbar ist, wobei das Anschlusselement oberhalb der Kolben-Zylinder-Einheit (10, THZ) angeordnet ist und, wobei das Anschlusselement oberhalb eines ersten Gehäuses (GH1) angeordnet ist, wobei die Kolben-Zylinder-Einheit (10, THZ) und der Kolben der Kolben- bzw. Doppelhubkolbenpumpe der Druckversorgungseinrichtung (11) im ersten Gehäuse (GH1) angeordnet sind.

## Beschreibung

Die vorliegende Erfindung betrifft eine Betätigungsvorrichtung für ein hydraulisches Betätigungssystem, insbesondere eine Kraftfahrzeugbremse oder einen elektrifizierten Kupplungs- und Gangsteller, nach dem Oberbegriff des Patentanspruches 1.

### Stand der Technik

Der Einbau von Aggregaten, insbesondere im Motor- oder Aggregateraum, steht in Anbetracht der vielen neuen Systeme der Automobilbauer (OEM) vor immer größeren Problemen wegen der knappen Einbauräume. Teilweise wird z. B. das ABS-Aggregat, insbesondere bei Fronttrieb und Quermotor, hinter dem Motor angeordnet, was zur Folge hat, dass beim Tausch des ABS-Aggregats der Motor ausgebaut werden muss.

Daher besteht die Forderung vom OEM, die bestehenden Aggregate zu verkleinern oder neue möglichst kompakt zu gestalten. Hinzu kommt, dass es Rechts- und Linkslenker gibt, was bei Bremsaggregaten zur Folge hat, dass das sogenannte Packaging gleich sein soll.

Viele Aggregate haben elektrische Funktionen und Sensoren, welche oft mehrere Stecker erfordern, was insbesondere montageaufwändig ist.

Weiterhin werden die Forderungen nach Crashsicherheit immer höher, was zur Folge hat, dass die Einbaulängen der Systeme im Aggregateraum möglichst kurz und schmal sein sollen, insbesondere, wenn diese an der Stirnwand befestigt sind und benachbarte Aggregate oder Steuergeräte zu dieser Einbaueinheit angebracht sind.

Bekanntlich besteht ein starker Trend bei Bremssystemen von den heute üblichen sogenannten "3-Box-Lösungen", bei denen Bremskraftverstärker, ABS/ESP-Aggregat und Vakuumpumpe unterschiedliche Baueinheiten bilden, die insbesondere auch räumlich getrennt sein können, auf integrierte "1-Box-Lösungen" zu wechseln, bei denen alle Komponenten wie Druckversorgung, hydraulische (Ventil-)Einheit (HCU), Regeleinheit (ECU) und Hauptzylinder in einer Baueinheit integriert sind. In der DE 10 2012 213 216 ist z. B. ein solches kompaktes "1-Box-Bremssystem" beschrieben. Das Hauptmerkmal ist hier, dass die Achse des Elektromotors senkrecht zur Längsachse der ersten Zylinderkolbeneinheit steht.

Mitte der 1980er Jahre produzierte Teves mit Mark 2 eine teilintegrierte Lösung mit diesem Merkmal, aber auch als Variante, dass die Achse des E-Motors mit Pumpe parallel zur Betätigungsachse angeordnet war. Bemerkenswert und Unterscheidung von der vorgestellten Erfindung ist keine Integration von Motor und Druckversorgung und ECU in einer Gehäuseeinheit. Hier war der Motor mit Pumpe angebaut und mit Schlauchleitungen mit dem Gehäuse aus Ventilblock (HCU) und Zylinderkolbeneinheit verbunden. Die Zielsetzung einer sehr schmalen und kurzen Baueinheit wurde noch nicht erreicht.

Als Sensor für den elektrischen Antriebsmotor wird in der DE 10 2011 017 436 ein Zahnradantrieb des Motortargets beschrieben. Das Sensorelement ist hier in einem Sensormodul angeordnet, das über Steckverbindung mit der Systemleiterplatte verbunden ist. Zusätzlich werden redundante Pedalwegsensoren und ein Sensor zur Überwachung des Füllstandes im Bremsflüssigkeitsbehälter benötigt.

Bei einer in der DE 10 2012 213 216 beschriebenen Bremsanlage ist eine erste, durch den Fahrzeugführer betätigte Zylinder-Kolben-Anordnung, eine Druckbereitstellungseinrichtung und eine Ventilanordnung in demselben Gehäuse angeordnet, wobei die Achse des Elektromotors der Druckbereitstellungseinrichtung im Wesentlichen senkrecht zur Längsachse der ersten Zylinder-Kolben-Anordnung angeordnet ist. Mit dieser Lösung ist bereits eine bestimmte Kompaktheit angestrebt, die jedoch noch weiter verbessert werden kann, insbesondere ist die DE 10 2012 213 216 auf die räumlichen Randbedingungen einer runden Kontur vom konventionellen Vakuumverstärker ausgelegt und berücksichtigt nicht die gesamtheitliche Packaging-Optimierung im Fahrzeug. Für ein optimales Packaging ist eine rechteckige Bauform opportuner als eine runde Kontur. Auch lässt insbesondere die Anpassungsfähigkeit an verschiedene Montagesituationen zu wünschen übrig, wie z.B. die Montage im Motorraum (sogenanntes "front bolted"), insbesondere für elektrische Bremskraftverstärker und elektrische Bremskraftversträker mit integriertem ABS, welche an der Spritzwand montiert sind..

Weitere Anforderungen sind:
- kurze und schmale Bauform
- gute Zugänglichkeit für Montage der hydraulischen Leitungen, insbesondere der Bremsleitungen zu den Radbremsen
- gute Zugänglichkeit für Stecker insbesondere des Hauptleitungssatzes und kurze Kabellänge zur Kfz-Verteilerbox (Zentralelektrik)
- gute Entlüftbarkeit nicht nur in Endmontage (mit Vakuum), sondern auch im Service (Entlüftung durch Pedalbetätigung)
- kurze Leitungswege der Powerleitungen vom Stecker zum Leistungsteil der Motorsteuerung
- gute Kühlung und Wärmeabfuhr des Leistungsteils (Endstufen, MOSFET und Treiber)
- Reduzierung Geräusch von Antrieb und Magnetventilen, Körperschallübertragung zum Spritzwand
- kurze Bohrungen vom THZ, Druckverzögerung zur HCU

### Aufgabe der Erfindung

Aufgabe der vorliegenden Erfindung ist es daher, eine möglichst kompakte, gewichts- und kostengünstige Betätigungsvorrichtung für hydraulische Komponenten, insbesondere für eine Kraftfahrzeugbremse, eine hydraulische Kupplung oder einen Gangsteller, bereitzustellen, die z.B. flexibel für verschiedene Fahrzeuge bzw. Einbausituationen geeignet ist.

### Lösung der Aufgabe

Die Aufgabe der Erfindung wird durch eine Betätigungsvorrichtung mit den Merkmalen des Patentanspruchs 1 gelöst.

Die erfindungsgemäße Betätigungsvorrichtung zeichnet sich vorteilhaft dadurch aus, dass sie kompakt und kostengünstig ist, ein geringes Gewicht aufweist und überdies flexibel für verschiedene Fahrzeuge bzw. Einbausituationen ist. Bei Verwendung als Betätigungsvorrichtung für eine Fahrzeugbremse erfüllt sie vorteilhafterweise folgende Anforderungen und weist die folgenden Vorteile auf:
- kurze und schmale Bauform und optimaler nutzbarer Geometrie für andere Komponenten im Fahrzeug, insbesondere durch rechteckige Grundform und gute Steckerpositionierung;
- weitgehend symmetrische Gestaltung für Linkslenker (LL) und Rechtslenker (RL);
- gute Zugänglichkeit der hydraulischen und elektrischen Anschlüsse für die Montage;
- die Befestigung an der Stirnwand (Spritzwand) des Fahrzeuges soll sowohl vom Motor (front bolted) als auch vom Fußraum möglich sein;
- möglichst geringe Kosten und Gewicht u. a. durch kurze Verbindungsbohrungen;
- modular für verschiedene Ausbaustufen, z. B. autonomes Fahren;
- hohe Fehlersicherheit;
- gute Entlüftbarkeit;
- gute Kühlung und Wärmeabfuhr vom PCB zur Gehäuseeinheit mit hoher Wärmekapazität;
- Reduzierung Geräuschniveau durch geringe Körperschallübertragung in Fahrgastraum;
- gutes Handling bei Montage und Entlüftung;
- Bauraum ist optimiert auf ein gesamtheitliches Packaging für alle Komponenten im Fahrzeug.

Die Erfindung zeichnet sich vorteilhaft dadurch aus, dass die Achse der Kolben-Zylinder-Einheit und die Achse der Kolben- bzw. Doppelhubkolbenpumpe der Druckversorgungseinrichtung parallel zueinander und in vertikaler Richtung zueinander beabstandet angeordnet sind, und dass die Kolben-Zylinder-Einheit und die Druckversorgungseinheit in einem ersten Gehäuse angeordnet sind, wobei der Antrieb, an dem ersten Gehäuse befestigt und unterhalb der Achse der Kolben-Zylinder-Einheit angeordnet ist. Dabei kann zwischen dem Antrieb und dem ersten Gehäuse noch ein, insbesondere schalldämmendes Zwischengehäuse oder Element angeordnet sein. Sofern die Betätigungsvorrichtung in einem Fahrzeug zur Druckregelung dessen Radbremsen verwendet wird, kann die Betätigungsvorrichtung um einen Winkel ϕ von 5° bis 30° zur Vertikalen gekippt im Motorraum angeordnet sein. Durch diese vorteilhafte Ausbildung der erfindungsgemäßen Betätigungsvorrichtung ergibt sich eine besonders schlanke Bauweise, so dass die erfindungsgemäße Betätigungseinrichtung sehr kurz baut und platzsparend, z.B. im Motorraum, angeordnet. In einem Fahrzeug ist sie somit vorteilhaft für den Einsatz in Links- sowie Rechtslenker-Fahrzeugen verwendbar.

Bei einem hydraulischen System mit wenigen Magnetventilen, Druckgebern (z.B. bei einem Kupplungs- und Gangsteller) bzw. in einer Ausführung ohne Hauptbremszylinder (z.B. Brake-by-Wire Hydrauliksystemen ohne Hauptbremszylinder, Hydrauliksysteme mit wenigen Magnetventilen) kann im Sinne des Erreichens einer extrem schmalen Bauform auch der Gehäuseteil (GH2), der die Magnetventile und Druckgeber beinhaltet, parallel zueinander und in vertikaler Richtung zueinander beabstandet zum ersten Gehäuseteil, der die Druckversorgereinrichtung umfasst, angeordnet werden. Dabei sind die Magnetventile senkrecht zur Achse der Druckversorgereinrichtung angeordnet, damit sie von der ECU, der die Magnetspulen der Magnetventile beinhaltet durch Aufstecken direkt kontaktiert. Dies hat auch den Vorteil, dass der Drehwinkelgeber des Motors in einem geringen Abstand zur ECU ist und einfacher kontaktiert werden kann.

Es ist möglich, dass die Ventilanordnung in einem eigenen zweiten Gehäuse oder mit im ersten Gehäuse angeordnet ist oder Bestandteil des ersten Gehäuses ist.

Die elektrische Verbindung zwischen der Leiterplatte der Steuer- und Regeleinheit kann vorteilhaft steckbar ausgeführt sein, so dass beim Aufsetzen der Steuer- und Regeleinheit auf den Antriebsmotor und die Ventilanordnung sowohl Antriebsmotor, Sensorik als auch Magnetventile direkt mit der Steuer- und Regeleinheit kontaktiert werden. Hierdurch werden vorteilhaft zusätzliche Verkabelungsschritte eingespart.

Ferner kann die erfindungsgemäße Betätigungsvorrichtung derart ausgebildet sein, dass die meisten oder sämtliche Hydraulikkomponenten, insbesondere Magnetventile, Druckkolben, Hauptbremszylinder, in einem Hydraulikblock angeordnet sind. Der Hydraulikblock kann dabei ein oder zweiteilig ausgebildet sein. Bei einer zweiteiligen Ausführung sind das erste Gehäuse und das zweite Gehäuse vorteilhaft form- oder kraftschlüssig miteinander verbunden. Auch bietet es sich an, zwischen beiden Gehäusen eine sogenannte hydraulische Leiterplatte anzuordnen, welche die hydraulische Verbindung, insbesondere der hydraulischen Komponenten THZ, Druckversorgung, Magnetventile und Druckgeber ermöglicht bzw. realisiert. Damit kann vorteilhaft die Dicke der Ventilplatte und die Anzahl der Verbindungsbohrungen und Verschlußstopfen reduziert werden. Zusätzlich ist es von Vorteil, wenn ein guter thermischer Übergang zwischen beiden Gehäusen besteht.

Eine vorteilhafte Ausgestaltung der Erfindung ergibt sich, wenn auf der einen Seite der Ventilanordnung die Druckversorgungseinrichtung und die Kolben-Zylinder-Einheit angeordnet sind und auf der gegenüberliegenden Seite der Ventilanordnung die elektronische Steuer- und Regeleinheit angeordnet ist. Diese sandwichartige Anordnung ermöglicht vorteilhaft eine kleine raumsparende Anordnung, wobei die Gehäuse der elektronischen Steuer- und Regeleinheit und der Ventilanordnung eine Breite aufweisen, die wesentlich kleiner als deren Höhe und Tiefe ist.

Die vorbeschriebene Ausführungsform kann dahingehend ergänzt werden, dass stirnseitig an der Reihenanordnung bestehend aus elektronischer Steuer- und Regeleinheit, Ventilanordnung sowie die übereinander angeordneter Anordnung von Druckversorgungseinrichtung und die Kolben-Zylinder-Einheit der Motor angeordnet ist. Ferner kann ein Teil des Gehäuses der elektronischen Steuer- und Regeleinheit oberhalb der Ventilanordnung und/oder des ersten Gehäuses angeordnet sein. Auch ist es dabei vorteilhaft möglich, dass der Vorratsbehälter oberhalb der Kolben-Zylinder-Einheit oder oberhalb des Teils des Gehäuses der elektronischen Steuer- und Regeleinheit angeordnet ist. Um möglichst wenige hydraulische Verbindungsleitungen vorsehen zu müssen, kann der Vorratsbehälter so ausgebildet sein, dass sich ein Bereich des Vorratsbehälters seitlich nach unten neben dem ersten Gehäuse erstreckt und dieser Bereich Anschlüsse zum Anschluss an Ein- und Auslasskanäle des Gehäuses aufweist.

In einer weiteren möglichen Ausführungsform ist vorteilhaft die Ventilanordnung oberhalb der Achse der Kolben-Zylinder-Einheit angeordnet. Hierdurch ergibt sich ebenfalls eine sehr kleine und gute Anordnung aller Komponenten der erfindungsgemäßen Betätigungsvorrichtung. Bei dieser Ausgestaltung ist es besonders vorteilhaft, wenn die die elektronische Steuer- und Regeleinheit im Querschnitt L- oder U-förmig ausgebildet ist, und an zwei oder drei Seiten des ersten Gehäuses anliegt. Insbesondere die U-förmige Ausbildung der elektronischen Steuer- und Regeleinheit zeichnet sich durch sehr einfache elektrische Verbindungen zwischen den Komponenten und eine gute Wärmeabfuhr aus. Das Gehäuse der Steuer- und Regeleinheit umfasst dabei erste Gehäuse von unten, wobei sich die beiden seitlich des ersten Gehäuses nach oben erstreckenden Schenkelbereiche bis nach oben hin zur Ventilanordnung erstrecken. Hierdurch ist auch eine unmittelbare Verbindung zwischen Ventilanordnung und Steuer- und Regeleinheit möglich. So können die Antriebsspulen von Magnetventilen in der Steuer- und Regeleinheit und die Anker und übrigen hydraulischen Komponenten der Magnetventile in der Ventilanordnung untergebracht sein.

Bei der zuletzt beschriebenen Ausführungsform kann der Motor der Druckversorgungseinheit unmittelbar oder über ein dazwischen angeordnetes Teil stirnseitig an die elektronische Steuer- und Regeleinheit angrenzen. Die Kontaktierung zwischen Motor und Steuer- und Regeleinheit erfolgt dann vorteilhaft mittels Steckkontakten, welche bei der Montage der Komponenten die elektrische Verbindung herstellen. Sofern ein Gehäuse zwischen Motor und dem ersten Gehäuse bzw. der Steuer- und Regeleinheit angeordnet wird, ist dieses vorteilhaft aus einem schalldämpfenden Material und/oder hat schalldämpfende Eigenschaften, welche es insbesondere auch aufgrund seiner mechanischen Eigenschaften und geometrischen Form hat.

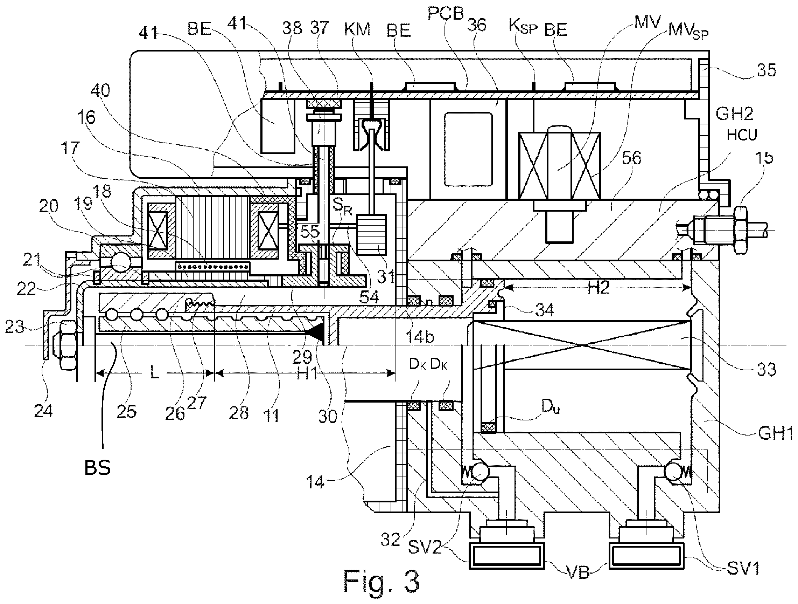

Die parallele Anordnung von Motor und Kolbenzylindereinheit setzt für eine kurze Baulänge voraus, dass sowohl Motor, Druckversorgungseinheit und dessen Antrieb kurz gebaut sind. Dies ist möglich mit z. B. einem Doppelhubkolben, Stufenkolben, ungestuftem Kolben und einen so genannten Hohlwellenmotor nach DE10 2008 063 772, bei dem die Spindel mit Kugelgewindetrieb, auch KGT genannt, innerhalb des Rotors angeordnet ist. Somit wird die Baulänge, wie später in Fig. 3 gezeigt, im Wesentlichen nur durch den Kolbenhub und die Kugelgewindetrieb-Mutter bestimmt.

Im ersten Gehäuse können neben der Kolbenzylindereinheit auch die Saugventile der Kolbeneinheit und der Wegsimulator untergebracht sein. Ebenso kann der Anschluss zum Vorratsbehälter im ersten Gehäuse realisiert sein.

Im Sinne der Erfindung ist es ebenfalls möglich, dass die Ventile entsprechend dem Systemkonzept in einem zweiten Gehäuse oder im ersten Gehäuse angeordnet sind. Dabei können in dem zweiten Gehäuse insbesondere Magnetventile und Druckgeber angeordnet sein. Die Magnetventile sind notwendig für Druckregelung in den hydraulischen Kreisen, wie z. Bremskreisen, so z.B. für das ABS, der Druckversorgungseinheit und der Druckbeaufschlagung verschiedenster Kolbenanordnungen. Alternativ können die Magnetventile bei einem elektrischen Bremskraftverstärker zur Steuerung der HZ-Kolben und Druckversorgung und Verbindung verwendet werden.

Die Abtrennung der zweiten Gehäuseeinheit hat den Vorteil der kürzeren Verbindungsbohrungen der vorgenannten Elemente aus der ersten Gehäuseeinheit zur zweiten Gehäuseeinheit, wobei die z. B. Ventile für die Druckversorgung gegenüber positioniert werden.

Besonders vorteilhaft ist es, wenn die Gehäuse, in denen die Kolben-Zylinder-Einheit, die Druckversorgungseinheit, die Ventile der Ventilanordnung sowie die Steuer- und Regeleinheit angeordnet sind, zusammen eine Breite aufweisen, welche weniger als 70 % der Höhe des Aggregats beträgt. Hierdurch ergibt sich eine schlanke Bauform, die sich platzsparend und konstruktiv leicht im Motorraum anordnen lässt. Ein geringerer Abstand ist auch dann sinnvoll, wenn beispielsweise benachbart zum einem Bremssystem eine elektrohydraulische Kupplungs-und Gangsteller-Betätigungseinrichtung vorgesehen ist. Für eine derartige Systemanordnung ist eine besonders schmale sowie rechteckige Bauform des Hydraulikblocks anzustreben.

Eine besonders vorteilhafte mögliche Ausgestaltung der vorbeschriebenen Betätigungsvorrichtung erhält man, wenn die Gehäuse, in denen die Kolben-Zylinder-Einheit, die Druckversorgungseinheit, die Ventile der Ventilanordnung sowie die Steuer- und Regeleinheit angeordnet sind, zusammen eine ebene Seitenwandung bilden, welche z.B. mindestens einer Elektronikkomponente eines Fahrzeuges, insbesondere der Fahrzeugbatterie, zugewandt ist, insbesondere parallel zu dieser angeordnet ist.

Der Vorratsbehälter kann ebenso vollständig oberhalb mit seitlichen Anschlüssen direkt zu den Saugeingängen der Druckversorgung angeordnet sein. Dies erspart oder reduziert große Bohrungen in den Gehäusen. Ebenso ist es möglich, dass sich der Vorratsbehälter zum Teil oberhalb und zum Teil seitlich neben den der Kolben-Zylinder-Einheit, der Druckversorgungseinheit sowie der Steuer- und Regeleinheit entlang erstreckt. Auch kann an dem Vorratsbehälter ein Kanal befestigt, insbesondere angeschweißt, oder angespritzt bzw. angeformt sein, der zur Verbindung mit der Kolben-Zylinder-Einheit, der Druckversorgungseinheit und/oder der Ventilanordnung dient. Hierdurch kann vorteilhaft auf Bohrungen in einem der Gehäuse verzichtet werden.

So kann auch die Steuer- und Regeleinheit in einer weiteren dritten Gehäuseeinheit angeordnet sein, die direkt an dem zweiten Gehäuse sitzt und mit dieser verbunden ist, wobei die Magnetspulen funktionell zur 2. Gehäuseeinheit gehören.

Das erste Gehäuse, welches im wesentlichen alle Kolben des THZ, Kolben der Druckversorgung und die Saugventile und auch den Wegsimulator aufnimmt, weist vorteilhaft einen Befestigungsflansch für die Befestigung an der Spritzwand eines Fahrzeuges sowie Pedalinterface mit Pedalsensorbetätigung auf. Das erste Gehäuse wird vorzugsweise im Druckguss- oder Stranggussverfahren hergestellt und für die Kolbenführung der Druckversorgereinheit und des Betätigungskolbens der Bremspedaleinheit nachbearbeitet. Hierbei müssen am Ende jeweils die Abschlussdeckel eingestemmt werden, wenn eine Bohrung verschlossen werden muss.

Das zweite Gehäuse, welches insbesondere die Ventilanordnung mit ihren Magnetventilen, Rückschlagventilen, Blenden und Druckgebern aufnimmt, wird zur Befestigung insbesondere mit dem gut fließbaren Material, z. B. Aluminium, verstemmt oder verpresst. Das zweite Gehäuse kann zudem optional einen Teil des Druckversorgungskolbens aufnehmen.

Die erste Gehäuseeinheit und die zweite Gehäuseeinheit können auch als ein Teil ausgeführt werden bzw. die beiden Gehäuseteile können auch in einem Fügeprozess vorzugsweise vor der Bearbeitung der Kolbenzylinderführungen verbunden werden.

Es ist von Vorteil, wenn im ersten oder zweiten oder beiden Gehäusen die Sensorbetätigungen untergebracht sind, welche die Bewegung des Pedals und des Rotors auf ein drehbares Target (z.B. Magnet) übertragen, wobei das Sensorauswerteelement direkt auf der Systemleiterplatte positioniert oder damit verbunden ist. Hierdurch sind keine zusätzlichen Leitungen, Steckverbinder oder Leiterplatten (PCB) zur Aufnahme der Schutz- und Auswerteschaltung, z. B. des Hallelements, notwendig.

Ein elektrisches Anschlusselement (Stecker) zum Bordnetz ist vorzugsweise oben mit horizontaler Steckrichtung, insbesondere unterhalb des Vorratsbehälters, angeordnet. Diese Position ist gut zugänglich und für den Leitungssatz mit rechtwinkligem Abgang eine kurze Leitungslänge zum Bordnetz. Dabei kann vorzugsweise die Steckrichtung derart ausgewählt bzw. vorgesehen werden, dass diese zur Fahrzeugaußenseite und nicht in Richtung der Fahrzeugmitte, ausgerichtet ist.

Die hydraulischen Anschlussleitungen zu den Radbremsen sind aus Sichtweise aus dem Fahrzeugraum stirnseitig angebracht, und damit gut zugänglich für Linkslenker LL und Rechtslenker RL und erlauben einfache Montagewerkzeuge.

Eine ggf. auftretende Leckage durch Dichtungen kann durch ein im unteren Teil erweitertes Motorgehäuse oder Leckagegehäuse aufgefangen und über eine Elektrode sensiert werden. Bei Letzterem wird vorausgesetzt, dass bei einem bestimmten Leckagevolumen der Niveaugeber des Bremsflüssigkeitsvorratsbehälters anspricht.

Eine gute Entlüftung aller hydraulischen Komponenten (Betätigung über Bremspedal bzw. Kupplungspedal) insbesondere für den Betrieb in der Rückfallebene ist wichtig, da im Normalbetrieb eine weniger gute Entlüftung durch die Steuerung der Druckversorgung ausgeglichen wird. Weiterhin ist die gute Entlüftung der Magnetventile für den PWM-Betrieb notwendig, da hierüber die Dämpfung der Ankerbewegung beeinflusst wird. Dazu ist notwendig, dass die Ausgänge der Anschlüsse der Radbremsleitung höher liegen als die entsprechenden Magnetventile zur Druckregelung der Räder.

Die Position der Leistungsteile auf der PCB wirkt kostentreibend bei ungünstiger Realisierung. Vorteilhaft ist dagegen eine Positionierung direkt neben dem Stecker und Kontaktierung zum Motor im gleichen Bereich.

Die Ansteuerung des Motors erzeugt Verlustleistung im Leistungsteil (MOSFET und Treiber). Hierbei ist eine Wärmeabfuhr zur Gehäuseeinheit vorteilhaft und kostengünstig realisierbar. Da der Bremsbetrieb von relativ kurzer Dauer ist, genügt zur Wärmeableitung eine große Wärmekapazität der Gehäuseeinheit.

Im Betrieb entsteht Körperschall durch die Motorlager, KGT und Betätigung der Magnetventile. Hierzu ist vorgesehen, dass der Motor über ein dämpfendes Kunststoffgehäuse mit der Gehäuseeinheit verbunden wird. Die Gehäuseeinheit ist wiederum durch einen getrennten Flansch aus Kunststoff mit der Spritzwand verbunden. Eine weitere Verbesserung ist vorgesehen durch Lagerung des Flansches in dämpfendem Material (z. B. Elastomeren) in einem Adapterteil zur Spritzwand.

Um einen sonst unvermeidlichen Spindelschlag zu und unerwünschte Querkräfte auf den Kolben der Druckversorgungseinrichtung wesentlich zu verringern und im besten Falle ganz zu vermeiden kann optional ein elastischer Biegestab zwischen Antrieb und Kolben der Druckversorgungseinheit bei den zuvor beschriebenen Ausführungsformen angeordnet werden.

Nachfolgend werden mögliche Ausführungsformen der erfindungsgemäßen Betätigungsvorrichtung anhand von Zeichnungen näher beschrieben.

Es zeigen:
- Fig. 1: schematisch eine Darstellung Block der wichtigsten Elemente ;
- Fig. 1c: die entsprechende Seitenansicht;
- Fig. 2: eine alternative Anordnung zur Fig. 1;
- Fig. 2a: die entsprechende Seitenansicht;
- Fig. 2b: die schalldämmende Anordnung zur Spritzwand;
- Fig. 3: eine Schnittzeichnung mit Motor, Sensor, elektr. Anschluss HCU und ECU mit Magnetspule, Druckkolben mit Saugventilen;
- Fig. 4: zeigt eine perspektivische Darstellung einer möglichen Anordnung.

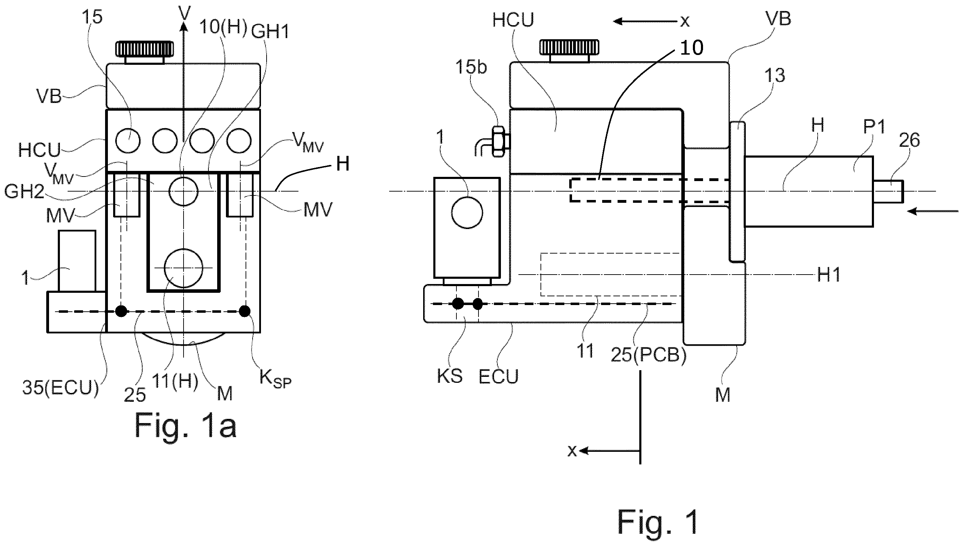

**Fig. 1** zeigt eine mögliche Ausführungsform der erfindungsgemäßen Betätigungsvorrichtung für den Einsatz in einem Fahrzeug zur Druckversorgung des Fahrzeugbremssystems oder eines Kupplungs- und Gangstellers. Der Motor M ist dabei auf einer zweiten Horizontalachse H1 parallel zur Achse H der ersten Zylinderkolbeneinheit angeordnet. Auf diese Achse H wirkt der Pedalstößel 26, der mit dem nicht dargestellten Bremspedal verbunden werden kann. Auf der Achse H1 kann neben dem Motor M auch der Kolben 11 der Druckversorgungseinrichtung angeordnet sein.

In der Hauptachse H sind ebenfalls das Pedalinterface P1 und die Hauptzylinderanordnung 10 mit den Druckkolben für die beiden Bremskreise, z. B. üblicherweise ein THZ oder einer Anordnung entsprechend EP2015/068696 angeordnet. Diese sind Bestandteil der Gehäuseeinheit GH1 zusammen mit den Komponenten der Druckversorgungseinrichtung, z.B. Kolben-Zylinderanordnung 11. Angeflanscht an das erste Gehäuse GH1 ist der Motor M, der die Druckversorgungseinrichtung 11 antreibt. Oberhalb oder in vertikaler Richtung ist die Ventilanordnung HCU mit stirnseitigen Anschlüssen 15 zu den Radbremsen und Vorratsbehälter VB positioniert. Unterhalb ist die Steuer- und Regeleinheit ECU mit Stecker 1, der über die Kontakte KS mit der PCB 25 verbunden ist, angeordnet.

Fig. 1a zeigt den Teil-Schnitt XX der Betätigungsvorrichtung von Figur 1 . Hierbei umfasst die im Querschnitt U-förmig ausgebildete Steuer- und Regeleinheit ECU die Gehäuseeinheit GH1 von unten, wobei der THZ-Kolben 10 oberhalb des Kolbens 11 der Druckversorgungseinrichtung angeordnet ist. Oberhalb des ersten Gehäuses GH1 ist die Ventilanordnung HCU angeordnet, welche beidseitig des ersten Gehäuses GH1 die Magnetventile MV mit vertikaler Achse V_{MV} aufnimmt. Die Magnetventile MV sind an ihrer Unterseite mit den Kontakten K_{SP} mit der Leiterplatte PCB der Steuer- und Regeleinheit ECU elektrisch verbunden. Alternativ zur Stirnseite kann der Stecker 1 auch seitlich an der Steuer- und Regeleinheit ECU angeordnet sein. Durch die vorbeschriebenen Merkmale ergibt sich eine extreme schmale Bauweise mit der vertikaler Stapelung von Steuer- und Regeleinheit ECU, Druckversorgungseinrichtung 11 und Kolbenzylindereinheit 10 sowie Ventilanordnung HCU.. Diese ergibt zudem eine extrem kompakte Bauweise mit guter Entlüftung aller hydraulischen Komponenten.

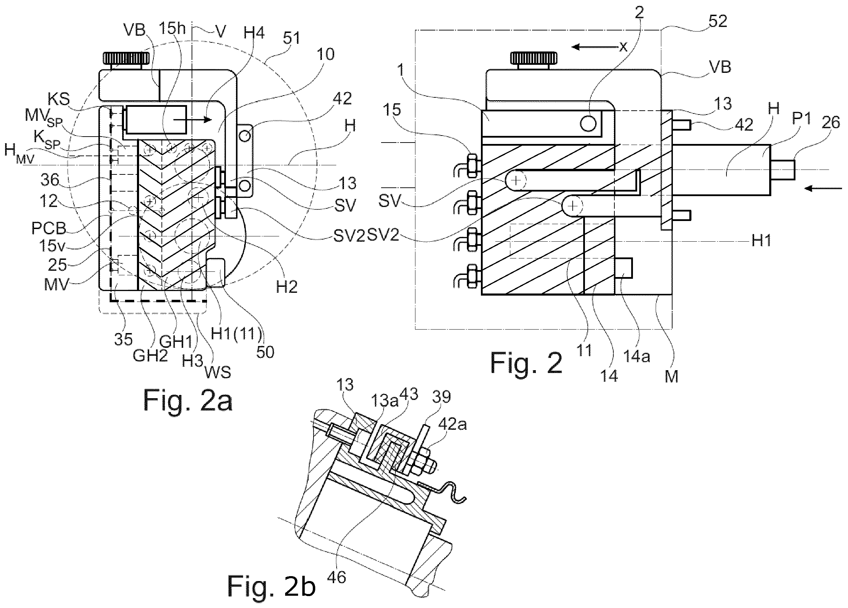

**Fig. 2** zeigt eine alternative Anordnung der Hauptkomponenten und Gehäusestrukturen mit Achse H1 von Motor M und Druckversorgung 11 parallel zur Betätigungsachse H, wobei hier der Pedalstößel 26 auf das Pedalinterface P1 wirkt und dieses mit mindestens einem Druckkolben und der Pedalwegsensorbetätigung verbunden ist. Auf die Sensoren wird hier nicht eingegangen. Üblicherweise werden Hall-Elemente verwendet.

Der Motor M ist über ein Zwischenstück 14 aus Schall dämmendem Material mit der Gehäuseeinheit GH1 mittels der Befestigungsschraube 14a verbunden. Durch das Zwischenstück 14 werden die hochfrequenten Schwingungen von Motor M und Kolbenantrieb z.B. KGT reduziert. Die erste Gehäuseeinheit GH1 hat bei dieser Ausführungsform im Querschnitt eine L-förmige Bauform und ist stirnseitig mit dem Flansch 13 verbunden. Dieser wird an der Stirnwand mit Schrauben 42 befestigt.

Der Motor M wirkt mit seinem Antrieb vorzugsweise über KGT auf den Kolben 11 der Druckversorgungseinheit. Hierbei ist bei der Kolbenlösung besonders ein Doppelhubkolben von Vorteil, der eine besonders kurze Baulänge ermöglicht, da der Kolbenhub bei kontinuierlicher Volumenförderung über Vor- und Rückhub klein gehalten werden kann. Dieser besitzt für Vor- und Rückhub zwei Saugventile SV1 und SV2, die mit dem Vorratsbehälter VB verbunden sind. Bei einem Einfachkolben ist nur ein Saugventil notwendig. Stirnseitig sind die Anschlüsse 15 für die Radbremszylinder vorgesehen, wodurch diese optimal zugänglich sind. Oberhalb des ersten Gehäuses GH1 ist der Stecker 1 angeordnet mit vorzugsweise seitlichem Abgang 2 des Leitungssatzes. Damit ist eine kurze Leitungslänge zum Bordnetz möglich. Der Vorratsbehälter VB erstreckt sich dabei teilweise über und neben dem Stecker und an der Hinterseite der Anordnung. Dieser führt zu der vor oder hinter dem Federdom liegenden elektrischen Bordnetzbox des Fahrzeuges. O. g. ist noch verständlicher dargestellt in **Fig. 2a****,** der Ansicht vom Pedalstößel in Richtung x.

In **Fig. 2a** ist rechts die erste Gehäuseeinheit GH1 dargestellt, welche die Kolbenzylindereinheit 10 (Achse H) und die Kolben 11 (Achse H1) der Druckversorgungseinheit aufnimmt.

Vorzugsweise sind Kolbenzylindereinheiten 10, 11 auf einer vertikalen Achse angeordnet, sowie der Wegsimulator WS und die Schaltventile SV1, SV2 mit möglichst kleinem Abstand zur Ventilanordnung HCU, welche im Wesentlichen die Magnetventile MV und den bzw. die Druckgeber aufnimmt, angeordnet. Entsprechend dem Systemkonzept sind hier ca. 10 - 25 Magnetventile MV für die Druckregelung ABS / ESP, der Steuerung der Druckversorgungseinrichtung 11 und der Kolbenzylindereinheit 10 und des Wegsimulator WS notwendig. Zudem sind Rückschlagventile von der Kolbenzylindereinheit zum Vorratsbehälter VB und Druckgeber vorzusehen. Durch die erfindungsgemäße Anordnung sind nur kleine Bohrungslängennotwendig, wenn z. B. das Magnetventil MV zur Wegsimulatorschaltung neben dem Wegsimulator-Kolben angeordnet ist. Damit werden geringe Kosten und Strömungswiderstände erreicht. Neben der Ventilanordnung HCU ist die Steuer- und Regeleinheit ECU angeflanscht, deren Leiterplatte PCB 25 über die Spulenkontakte K_{SP} mit den Magnetventilspulen verbunden ist. Ebenso ist der Motor M mit dem elektrischen Anschlusselement 12 mit der Leiterplatte PCB verbunden. Diese Anordnung wird anhand der Fig. 3 detailliert beschrieben.

Es wurde bereits erwähnt, dass hier auf die Sensorbeschreibung von Pedalweg Motordrehung, Niveau der Hydraulikflüssigkeit nicht eingegangen wird. Ziel sollte sein, dass alle Sensorelemente auf der Systemleiterplatte PCB 25 angeordnet sind und die Targets der Sensoren in der Nähe der Systemleiterplatte angeordnet sind und einen geringen Abstand zum Systemelement (<5 mm) aufweisen. Das mit den Kontakten versehene Steckerteil wird hiervorzugweise über sogenannte Einpresskontakte mit der PCB verbunden. Der Stecker 1 wird hier seitlich mit der üblichen Mechanik gesteckt. An der in Figur 2 und 2a gezeigten Stelle ist er besonders gut zugänglich. Der Vorratsbehälter VB hat im Steckerbereich 1 eine Aussparung. Die Hydraulikverbraucheranschlüsse, insbesondere Radbremsen 15 können sowohl vertikal Richtung übereinander als auch horizontal nebeneinander angeordnet werden. Bei horizontaler Anordnung sind im ersten Gehäuse Verbindungsbohrungen vorzusehen.

Die beiden Gehäuseteile GH1 und GH2 können zusammen ein Gehäuse bilden oder getrennt ausgebildet sein.

Die Betätigungseinrichtung kann mittels des Gehäuseflansches 13 an der Stirnwand des Fahrzeugs befestigt werden. Hierbei können auf der rechten Seite gut zugänglich so genannte "front bolted" Schrauben und auf der linken Seite des Flansches "rear bolted" Schrauben eingesetzt werden. Es genügt, wenn z.B. nur eine Schraube "front bolted", also von vorne vom Fahrzeug aus zugänglich ist. Damit sind alle Montagemöglichkeiten realisierbar.

Da bekanntlich jede Dichtung lecken kann und die Leckage nicht mehr nach außen treten darf, kann hier auf der Unterseite vom ersten Gehäuse GH1 z. B. mit 14c kombiniert ein Leckagereservoir 50 gebildet sein.

Die Wärme von der Leiterplatte PCB und den elektronischen Bauteilen kann über einen Wärmeleitkörper 26 zur Ventilanordnung HCU abgeleitet werden. Die Steuer- und Regeleinheit ECU kann eben oder bei größerem Leiterplattenflächenbedarf unten rechtwinklig gestaltet werden.

Zur Beurteilung des Bauraumgewinns ist hier die Umrisskontur des kleinen Vakuum-BKV eingezeichnet. Auf der rechten Seite entsteht zusätzliches Volumen für elektrische Aggregate, wie z. B. einer Batterie. Dieser Bauraumgewinn ist besonders wichtig für die Rechtslenker, da hier der quer liegende Motor viel Platz benötigt.

Im Gehäuseteil GH1 oder GH2 kann auch der Wegsimulator des Bremssystems mit Kolben und Feder untergebracht sein. Der Wegsimulator kann dabei achsparallel zur Achse des Hauptzylinders oder auch senkrecht dazu angeordnet werden.

In **Fig. 2** ist strichpunktiert die Umrisskontur 52 des 2-Kammer-Vacuum-Bremskraftverstärkers mit Teilstück des THZ (z.B. kleiner Vakuumverstärker mit 9" Durchmesser) dargestellt. Der mögliche Raumgewinn durch die erfindungsgemäße Anordnung wird sofort offensichtlich. Hier ist ein Baulängengewinn von fast 50 % und bei kleinem BKV von fast 40 % möglich. In **Fig. 2a** ist als Kreis 51 die Umrisskontur des kleinen Vakuum-BKV mit ca. 9" dargestellt. Hier wird der deutliche Bauraumgewinn des erfindungsgemäßen Bremskraftverstärkers bestimmend durch die Gehäuseteile GH1 und GH2 mit Vorratsbehälter VB deutlich.

**Fig. 3** zeigt eine Querschnittsdarstellung des Motors, Antriebes, der Druckversorgungseinrichtung DK, Ventilanordnung HCU und der Steuer- und Regeleinheit ECU mit deren wesentlichen Komponenten. Die Darstellung ist spiegelverkehrt zur Darstellung gemäß Fig. 2.

Das Motorgehäuse 16 ist über das Zwischenstück 32 aus vorzugsweise Schall dämmendem Material mit dem ersten Gehäuseteil GH1 verbunden, wobei die Zentrierung über Fortsatz 14b erfolgen kann. Motorgehäuse 16 und Zwischenstück 14 und ECU Gehäuse 35 sind abgedichtet, z. B. mit rechteckig schraffierten Flächen, die nicht einzeln beschrieben sind. Im Motorgehäuse 16 ist ein Vier-Punkt-Lager 20 eingepresst, welches die Axialkräfte in beiden Richtungen von der Spindel 25 und Rotor 22 aufnimmt und diese zentriert. Der Rotor 22 ist über eine Axialsicherung 29 gesichert und trägt im Statorbereich die üblichen Rotorbleche 19 mit Magneten 20.

Der Rotor 22 ist ferner stirnseitig mit einem Kegelzahnrad 28 verbunden, welches das zweite Kegelzahnrad 29 mit Welle 41 und Target 38 antreibt. Dieses wirkt auf das Sensorelement 37, welches die Rotordrehung auswertet. Hierbei sitzt das Sensorelement auf der Systemleiterplatte PCB und ist besonders kostengünstig und störungssicher. Alternativ zu der mechanischen Lösung kann eine nicht dargestellte Lösung umgesetzt werden, bei der Rotor anstatt der Verbindung mit einem Kegelrad mit einer Hülse verbunden ist, die Magnete beinhaltet und somit das Target 38 für die Auswertung des Drehwinkels des Motors bildet. Das Targetmagnetfeld kann dabei durch einsprechende Anordnung des Sensorelementes in der Nähe des Targets (z.B. durch Steckverbindung mit ECU) erfasst werden bzw. über magnetische Flussleitelemente zum entfernten Sensorelement auf der PCB geführt werden.

Das Kegelzahnrad 29 ist in einem Gehäuse 40 gelagert, welches mit dem Motorgehäuse 16 verbunden ist. Das Zahnrad 20 ist im Gehäuse mit radialem Spiel S_{R} gelagert, damit die biegsame Antriebswelle 41 mit entsprechender Verspannung kein Zahnspiel erzeugt. Die Welle ist hierbei in der Lagerbuchse 41, die im Zwischenstück 14 befestigt ist, gelagert. Die Welle 41 ist mit dem Zahnrad 29 verdrehfest verbunden, z. B. über ein entsprechendes Profil mit Verdrehsicherung. Am Rotor 22 ist der Biegestab BS über die Mutter 23 befestigt. Dieser ist mit der Spindel 25 verdrehfest, z.B. mittels eines Verschweißung 30, verbunden. Die Spindel 25 wirkt auf die KGT-Mutter 26, welche über z. B. ein Gewinde 27 verdrehfest mit dem Kolben 11 verbunden ist. Bei der Rotation von Rotor und Spindel bewirken die radialen Toleranzen einen Spindelschlag, welcher am Kolben entsprechend hohe Querkräfte erzeugt, welche kritisch sind für die Laufflächen der Dichtungen D_{K}. Die Biegeelastizität des Biegestabs BS reduziert dies auf kleine Werte. Dieses Prinzip kann auch bei nicht dargestellter feststehender Spindel und umlaufender Mutter angewandt werden. Der Kolben ist hier als Stufenkolben ausgeführt und ergibt bei kleinem Hub eine kurze Baulänge. Wie die Schnittzeichnung verdeutlicht, setzt sich die Baulänge aus Hub H1 + H2 = 2 x H1 + L von KGT-Mutter zusammen. Da diese innerhalb des Motors entsprechend DE 10 2008 063 772 vom Anmelder, einem Hohlwellenmotor, geht die eigentliche Motorbaulänge, die sich aus Stator und Lager zusammensetzt, in die Baulänge nicht ein. Der Freiraum des Hubanteils H1 wird für das Stanzgitter 31 der Wicklung, das mit den Wicklungsdrähten verbunden ist, genutzt. Zusätzlich kann hier noch die Motorsensierung 28-29 untergebracht werden, wie schon ausgeführt wurde.

Der Kolben wird über drei Dichtungen D_{K} abgedichtet, um die entsprechenden Druckräume abzudichten, auf die hier nicht näher eingegangen wird, auch nicht die hierfür optimale Gestaltung des Zwischenstücks 14 und GH1.

Die KGT-Mutter mit Kolben erfordert eine Verdrehsicherung, welche hier stirnseitig angebracht ist. Ein entsprechendes Teil 33 mit Vier- oder Mehrkantprofil ist mit dem GH1 verdrehfest verbunden und stützt sich auf eine Gleitbuchse 34, die verdrehfest mit dem Kolben verbunden ist. Diese Gleitführung profitiert von der kleinen Schmierwirkung der Bremsflüssigkeit. Der Kolbenantrieb kann auch mit feststehender Spindel und rotierender KGT-Mutter ausgeführt werden. Auf der einen Seite des GH1 sind die Saugventile SV1 und SV2 untergebracht, welche mit entsprechenden Anschlüssen zum VB verbunden sind. Wie strichpunktiert angedeutet, können diese auf der H2-Ebene in einem rohrförmigen Element angeordnet werden. Auf der Gegenseite wird die GH2-HCU angeordnet, welche, wie schon beschrieben, die MV und sonstige Ventile mit Druckgeber aufnimmt. Hierbei sind oben wie auch unten sehr kurze Verbindungsbohrungen von GH1 und GH2 deutlich erkennbar.

Mit dem GH2 ist das ECU-Gehäuse verbunden, welches die PCB mit den Bauelementen BE aufnimmt. Hier ist auch die kurze el. Verbindung zum Motor von Stanzgitter 31 zu Motorkontakt K_{M} beschrieben, in dessen Nähe auf der PCB die Powerkontakte des Steckers 1 mit den BE zur Motorsteuerung angeordnet. Die entsprechende Verlustleistung wird von der PCB über einen Wärmeleitkörper zum Ventilblock 56 der HCU abgeführt. Das ECU-Gehäuse 35 kann parallel und seitlich zum Motor ausgeführt werden. Mit dieser Anordnung kann eine vorteilhafte Kompaktlösung kostengünstig realisiert werden, welche viele Anforderungen berücksichtigt.

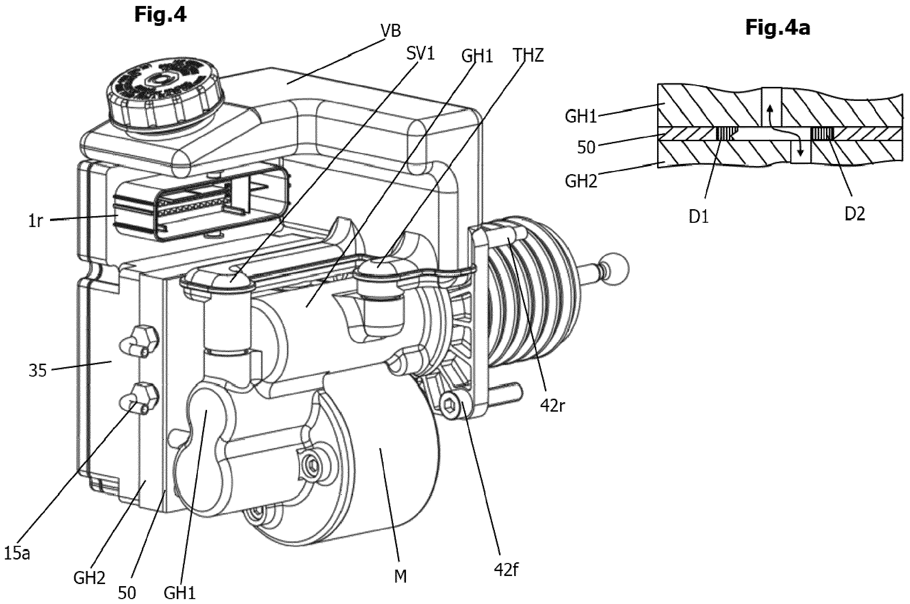

Fig. 4 zeigt in perspektivischer Darstellung besonders deutlich die Kompaktheit der Anordnung in der Ausführungsform für einen E-BKV, bei der die ABS/ESP-Einheit außerhalb im Aggregateraum angeordnet ist. Deshalb sind mit 15a nur zwei hydraulische Anschlussleitungen für die beiden Bremskreise des ABS/ESP-Aggregats gezeichnet im Vergleich zu vier zu den Radkreisen bei der integrierten Version wie in Fig. 2, 2a dargestellt. Wesentliche Unterschiede in der Anordnung der Hauptkomponenten Motor mit Druckversorgung entsprechend Fig. 3, Gehäuseeinheit GH1 und GH2 und ECU bestehen AX5 nicht, so dass beide Versionen modular aufgebaut und gefertigt werden können. Lediglich unterscheiden sich die Anzahl der Komponenten in ECU, GH2 z. B. Magnetventile und GH3 Ausführung der Kolben der Druckversorgung mit Anzahl der Saugventile.

Der Stecker 1c zeigt nur das so genannte mit der ECU verbundene Vaterteil. Der Vorratsbehälter ist nur mit einem Saugventil SV1 verbunden. Der zweite Anschluss THZ mit dem Hauptzylinder im Gehäuseflansch sind eine Schraube 42 front bolted zur Befestigung von vorn und die übrigen 1 bis 3 bei 42r als rear bolted vorgesehen.

Fig. 4a zeigt die Anordnung der hydraulischen Leiterplatte HLP50 zwischen den Gehäuseteilen GH1 und GH2, die miteinander verschraubt sind. Diese ersetzt durch entsprechende Kanäle die vielen Bohrungen und Blindstopfen am Ausgang einer Bohrung im Ventilblock. Sie sind notwendig zur Verbindung der hydraulischen Leitungen von z. B. THZ, Druckversorgung, Magnetventilen. Die HLP reduziert die Anzahl, insbesondere Länge, und ermöglicht einen dünneren Ventilblock (GH2), was Gewicht einspart. Zur Abdichtung können Lippendichtungen D1 oder Rechteckdichtungen verwendet werden, die vorzugweise an die HLP angespritzt werden.

Nachfolgend werden eine Reihe von erfindungsgemäßen Ausführungsbeispielen erläutert, die einzeln oder in Kombination mit anderen Merkmalen zur Definition der Erfindung herangezogen werden können:
Ausführungsbeispiel 1:
   Betätigungsvorrichtung für ein hydraulisches Betätigungssystem, insbesondere einer Kraftfahrzeugbremse oder einen elektrifizierten Kupplungssteller, folgende Komponenten aufweisend:
   - einen Anschluss für eine Betätigungseinrichtung, insbesondere in Form eines Bremspedals bzw. einer Kupplungsbetätigungseinrichtung,
   - eine von einem elektromotorischen Antrieb (M) angetriebene Druckversorgungseinrichtung (11) in Form einer Kolben- oder einer Doppelhubkolbenpumpe, wobei der Antrieb (M) direkt oder über ein Übersetzungsgetriebe, insbesondere ein Kugelumlaufgetriebe, den Kolben der Kolben- bzw. Doppelhubkolbenpumpe verstellt,
   - eine mittels der Betätigungseinrichtung betätigbare Kolben-Zylinder-Einheit (10, Hauptzylinder), die hydraulisch mit einem Druckmittelvorratsbehälter (VB) verbunden ist,
   - eine elektronische Steuer- und Regeleinheit (ECU),
   dadurch gekennzeichnet, dass
   die Achse (H) der Kolben-Zylinder-Einheit (10, Hauptzylinder) und die Achse (H1) der Druckversorgungseinrichtung (11) parallel zueinander angeordnet sind.
Ausführungsbeispiel 2:
   Betätigungsvorrichtung nach Ausführungsbeispiel 1, dadurch gekennzeichnet, dass eine Ventilanordnung (HCU) mit Ventil(en) zum individuellen Einstellen von Hydraulikdrücken in den hydraulischen Kreisen, insbesondere für Radbremsen, mindestens einer Kupplung, Doppelkupplung oder eines Gangstellers, und zum Trennen bzw. Verbinden der hydraulischen Kreise mit der Druckversorgungseinrichtung (11) und/oder der Kolben-Zylinder-Einheit (10) dient.
Ausführungsbeispiel 3:
   Betätigungsvorrichtung nach Ausführungsbeispiel 2, dadurch gekennzeichnet, dass die Ventilanordnung (HCU) in einem zweiten Gehäuse (GH2) oder mit im ersten Gehäuse (GH1) angeordnet ist oder Bestandteil des ersten Gehäuse (GH1) ist.
Ausführungsbeispiel 4:
   Betätigungsvorrichtung nach Ausführungsbeispiel 2 oder 3, dadurch gekennzeichnet, dass die elektrische Verbindung zwischen der Leiterplatte (PCB) der Steuer- und Regeleinheit (ECU) steckbar ausgeführt ist und beim Aufsetzen der Steuer- und Regeleinheit (ECU) auf den Antriebsmotor (M) und die Ventilanordnung (HCU) sowohl Antriebsmotor (M), Sensorik als auch Magnetventile direkt kontaktiert werden.
Ausführungsbeispiel 5:
   Betätigungsvorrichtung nach einem der Ausführungsbeispiele 2 bis 4, dadurch gekennzeichnet, dass alle Hydraulikkomponenten, insbesondere Magnetventile, Druckkolben, Hauptbremszylinder, in einem Hydraulikblock (GH1, GH2) angeordnet sind, wobei bei einer zweiteiligen Ausführung das erste Gehäuse (GH1) und das zweite Gehäuse (GH2) form- oder kraftschlüssig miteinander verbunden sind und ein guter thermischer Übergang zwischen beiden Gehäusen (GH1, GH2) besteht.
Ausführungsbeispiel 6:
   Betätigungsvorrichtung nach einem der Ausführungsbeispiele 2 bis 5, dadurch gekennzeichnet, dass zwischen beiden Gehäusen (GH1, GH2) eine hydraulische Leiterplatte angeordnet ist, über die die hydraulische Verbindung, insbesondere der hydraulischen Komponenten THZ, Druckversorgung, Magnetventile und Druckgeber, erfolgt.
Ausführungsbeispiel 7:
   Betätigungsvorrichtung nach einem der Ausführungsbeispiele 2 bis 6, dadurch gekennzeichnet, dass auf der einen Seite der Ventilanordnung (HCU) die Druckversorgungseinrichtung (11) und die Kolben-Zylinder-Einheit (10, Hauptzylinder) und auf der gegenüberliegenden Seite der Ventilanordnung (HCU) die elektronische Steuer- und Regeleinheit (ECU) angeordnet sind, wobei die elektronische Steuer- und Regeleinheit (ECU), die Ventilanordnung (HCU) sowie die übereinander angeordnete Anordnung von Druckversorgungseinrichtung (11) und die Kolben-Zylinder-Einheit (10, Hauptzylinder) sandwichartig in einer Reihe und aneinander angrenzend angeordnet sind.
Ausführungsbeispiel 8:
   Betätigungsvorrichtung nach Ausführungsbeispiel 7, dadurch gekennzeichnet, dass stirnseitig an der Reihenanordnung bestehend aus elektronischer Steuer- und Regeleinheit (ECU), Ventilanordnung (HCU) sowie die übereinander angeordneter Anordnung von Druckversorgungseinrichtung (11) und die Kolben-Zylinder-Einheit (10, Hauptzylinder) der Motor (M) angeordnet ist.
Ausführungsbeispiel 9:
   Betätigungsvorrichtung nach einem der Ausführungsbeispiele 2 bis 8, dadurch gekennzeichnet, dass ein Teil (2) der elektronischen Steuer- und Regeleinheit (ECU) oberhalb der Ventilanordnung (HCU) und/oder des ersten Gehäuses (GH1) angeordnet ist.
Ausführungsbeispiel 10:
   Betätigungsvorrichtung nach einem der Ausführungsbeispiele 1 bis 9, dadurch gekennzeichnet, dass der Vorratsbehälter (VB) oberhalb der Kolben-Zylinder-Einheit (10, Hauptzylinder) und/oder oberhalb des Teils (2) der elektronischen Steuer- und Regeleinheit (ECU) angeordnet ist bzw. sich erstreckt.
Ausführungsbeispiel 11:
   Betätigungsvorrichtung nach Ausführungsbeispiel 10, dadurch gekennzeichnet, dass sich ein Bereich (VB1) des Vorratsbehälters (VB) seitlich nach unten neben dem ersten Gehäuse (GH1) erstreckt und der Bereich (VB1) hydraulische Anschlüsse zum Anschluss an Ein- und Auslasskanäle des Gehäuses (GH1) aufweist.
Ausführungsbeispiel 12:
   Betätigungsvorrichtung nach Ausführungsbeispiel 2 bis 11, dadurch gekennzeichnet, dass die Ventilanordnung (HCU) oberhalb der Achse (H) der Kolben-Zylinder-Einheit (10, Hauptzylinder) angeordnet ist.
Ausführungsbeispiel 13:
   Betätigungsvorrichtung nach Ausführungsbeispiel 1, 2 oder 12, dadurch gekennzeichnet, dass die elektronische Steuer- und Regeleinheit (ECU) L- oder U-förmig ausgebildet ist, und an zwei oder drei Seiten des ersten Gehäuses (GH1) anliegt.
Ausführungsbeispiel 14:
   Betätigungsvorrichtung nach einem der Ausführungsbeispiele 11 bis 13, dadurch gekennzeichnet, dass der Motor (M) stirnseitig und/oder seitlich an die elektronische Steuer- und Regeleinheit (ECU) angrenzt.
Ausführungsbeispiel 15:
   Betätigungsvorrichtung nach einem der vorhergehenden Ausführungsbeispiele, dadurch gekennzeichnet, dass zwischen dem Motorgehäuse (16) und dem ersten Gehäuse (GH1) ein Zwischengehäuse (14) angeordnet ist, welches insbesondere aus einem Schalldämpfenden Material und/oder schalldämpfende Eigenschaften, insbesondere aufgrund seiner Ausgestaltung, aufweist.
Ausführungsbeispiel 16:
   Betätigungsvorrichtung nach einem der vorhergehenden Ausführungsbeispiele, dadurch gekennzeichnet, dass die Gehäuse (GH1, HCU, ECU) der Betätigungsvorrichtung zusammen im Querschnitt eine im Wesentlichen rechteckförmige Form aufweisen, wobei die Querschnittsebene parallel zur Ebene der Spritzwand des Motorraumes verläuft.
Ausführungsbeispiel 17:
   Betätigungsvorrichtung nach einem der vorhergehenden Ausführungsbeispiele, dadurch gekennzeichnet, dass an der ersten Gehäuseeinheit (GH1) ein Befestigungsflansch mit schalldämmenden Zusatzelementen zur Befestigung der Einheit an der Stirnwand eines Fahrzeuges vorgesehen ist.
Ausführungsbeispiel 18:
   Betätigungsvorrichtung nach einem der vorhergehenden Ausführungsbeispiele, dadurch gekennzeichnet, dass zumindest die Sensorauswerteelemente, insbesondere der Pedalwegsensoren, insbesondere alle Sensorauswerteelemente auf einer Systemleiterplatte (PCB) in der ECU angeordnet bzw. mit dieser verbunden sind, und dass zumindest ein Sensortarget, insbesondere in Form eines Magneten, in einem geringen Abstand (<5mm) zum Sensorauswerteelement angeordnet ist.
Ausführungsbeispiel 19:
   Betätigungsvorrichtung nach einem der vorhergehenden Ausführungsbeispiele, dadurch gekennzeichnet, dass die Sensorbetätigungen in der ersten Gehäuseeinheit (GH1) angeordnet sind und die Bewegung des Motorrotors über ein Kegelzahnradantrieb auf ein Target (insbesondere Magnet) übertragen wird und wobei das Auswerteelement des Sensors auf einer Systemleiterplatte (PCB) in der Steuereinheit (ECU) angeordnet ist.
Ausführungsbeispiel 20:
   Betätigungsvorrichtung nach einem der vorhergehenden Ausführungsbeispiele, dadurch gekennzeichnet, dass ein Anschlusselement, insbesondere Stecker (1) zum Anschluss an ein Bordnetz des Fahrzeuges, seitlich neben der Steuereinheit (ECU) oder stirnseitig an der Steuereinheit (ECU), insbesondere teilweise unter einem Vorsprung der Steuereinheit ECU und/oder dem Vorratsbehältnis (VB), angebracht ist.
Ausführungsbeispiel 21:
   Betätigungsvorrichtung nach einem der vorhergehenden Ausführungsbeispiele, dadurch gekennzeichnet, dass das Anschlusselement, insbesondere der Stecker (1), in horizontaler Steckrichtung in die Steuereinheit (ECU) eingesteckt bzw. einsteckbar und/oder ein Stecker mit insbesondere rechtwinkligem Kabelabgang ist, wobei insbesondere die Steckrichtung derart ausgewählt bzw. vorgesehen ist, dass diese zur Fahrzeugaußenseite und nicht in Richtung der Fahrzeugmitte, ausgerichtet ist.
Ausführungsbeispiel 22:
   Betätigungsvorrichtung nach einem der vorhergehenden Ausführungsbeispiele, dadurch gekennzeichnet, dass Anschlüsse (15) für die hydraulischen Leitungen zu den hydraulischen Kreisen, insbesondere Radbremsen, stirnseitig an der Ventilanordnung (HCU) bzw. der zweiten Gehäuseeinheit (GH2), insbesondere auf der dem Anschluss, insbesondere dem Bremspedal, abgewandten Seite der Betätigungsvorrichtung, angeordnet sind.
Ausführungsbeispiel 23:
   Betätigungsvorrichtung nach einem der vorhergehenden Ausführungsbeispiele, dadurch gekennzeichnet, dass das hydraulische Betätigungssystem ein elektrifizierter Kupplungssteller mit Gangsteller ist.
Ausführungsbeispiel 24:
   Betätigungsvorrichtung nach einem der vorhergehenden Ausführungsbeispiele, dadurch gekennzeichnet, dass die Kolben-Zylinder-Einheit (10, Hauptzylinder) hydraulisch mit einem Druckmittelvorratsbehälter (VB) verbunden ist und die Kolben-Zylinder-Einheit (10, Hauptzylinder) zumindest zwei Druckräume bildet, die mit hydraulischen Kreisen, insbesondere Bremskreisen, verbunden bzw. verbindbar sind.
Ausführungsbeispiel 25:
   Betätigungsvorrichtung nach einem der vorhergehenden Ausführungsbeispiele, dadurch gekennzeichnet, dass die Achse (H) der Kolben-Zylinder-Einheit (10, Hauptzylinder) und die Achse (H1) der Kolben- bzw. Doppelhubkolbenpumpe der Druckversorgungseinrichtung (11) parallel zueinander und in vertikaler Richtung zueinander beabstandet angeordnet sind.
Ausführungsbeispiel 26:
   Betätigungsvorrichtung nach einem der vorhergehenden Ausführungsbeispiele, dadurch gekennzeichnet, dass die Kolben-Zylinder-Einheit (10, Hauptzylinder) und die Druckversorgungseinheit (11) in einem ersten Gehäuse (GH1) angeordnet sind, wobei der Antrieb (M), an dem ersten Gehäuse (GH1) befestigt und unterhalb der Achse (H) der Kolben-Zylinder-Einheit (10) angeordnet ist.
Ausführungsbeispiel 27:
   Betätigungsvorrichtung nach einem der vorhergehenden Ausführungsbeispiele, dadurch gekennzeichnet, dass ein Verbindungskanal die Kolben-Zylinder-Einheit (10) und den Vorratsbehälter (VB) miteinander verbindet, wobei der Verbindungskanal durch eine Röhre, insbesondere einen Schlauch, und nicht durch eine Bohrung gebildet ist.
Ausführungsbeispiel 28:
   Betätigungsvorrichtung nach einem der vorhergehenden Ausführungsbeispiele, dadurch gekennzeichnet, dass mindestens eine Schraube zur Befestigung der Betätigungsvorrichtung im Motorraum eine sog. "front bolted" Schraube ist, welche von vorne vom Fahrzeug aus zugänglich bzw. einschraubbar ist.
Ausführungsbeispiel 29:
   Betätigungsvorrichtung nach einem der vorhergehenden Ausführungsbeispiele, dadurch gekennzeichnet, dass der Antrieb (M), insbesondere mit seinem Gehäuse, unmittelbar an die Steuer- und Regeleinheit (ECU) angrenzt, wobei Motor und Kolben der Druckversorgereinrichtung (11) koaxial angeordnet sind und insbesondere die Ventilanordnung (HCU) zwischen der Druckversorgungseinrichtung (11, GH2) und der Steuer- und Regeleinheit (ECU) angeordnet ist.
Ausführungsbeispiel 30:
   Betätigungsvorrichtung nach einem der vorhergehenden Ausführungsbeispiele, dadurch gekennzeichnet, dass die drehbare Spindel (25) innerhalb des Rotors (22) des Motors (M) angeordnet und mit diesem verbunden ist und der Kolben (11) mit der Spindelmutter (26) verbunden und mit der Spindel (25) auf einer Achse liegt, wobei der Kolben als Einfach- oder Doppelhubkolben ausgebildet ist.
Ausführungsbeispiel 31:
   Betätigungsvorrichtung nach einem der vorhergehenden Ausführungsbeispiele, dadurch gekennzeichnet, dass der Rotor (22) mit einem Lager (20), vorzugsweise 4-Punkt-Lager, einseitig im Motorgehäuse (16) gelagert ist.
Ausführungsbeispiel 32:
   Betätigungsvorrichtung nach einem der vorhergehenden Ausführungsbeispiele, dadurch gekennzeichnet, dass die Spindel (25) mit einem elastischen Biegestab (BS) verbunden ist, um radiale Bewegung, insbesondere in Form von Schlag, der Rotorachse nicht auf Spindel mit Kugelgewindetrieb und Kolben zu übertragen.
Ausführungsbeispiel 33:
   Betätigungsvorrichtung nach einem der vorhergehenden Ausführungsbeispiele, dadurch gekennzeichnet, dass eine Verdrehsicherung des Kolbens im Druckraum erfolgt und ein Formstück (33) zur Verdrehsicherung sich in einem Gleitlager (34) abstützt.
Ausführungsbeispiel 34:
   Betätigungsvorrichtung nach einem der vorhergehenden Ausführungsbeispiele, dadurch gekennzeichnet, dass die Druckversorgungseinrichtung (11) entweder als Kolbenpumpe ausgebildet ist, die über mindestens ein Ventil (SV1 oder SV2) mit dem Vorratsbehälter (VB) verbunden ist, oder als Doppelhubkolbenpumpe ausgebildet ist, die über mindestens zwei Ventile (SV1 und SV2) mit dem Vorratsbehälter (VB) verbunden ist.
Ausführungsbeispiel 35:
   Betätigungsvorrichtung für ein hydraulisches Betätigungssystem, insbesondere eine Kraftfahrzeugbremse oder einen elektrifizierten Kupplungs-und Gangsteller folgende Komponenten aufweisend, einen Anschluss für eine Betätigungseinrichtung, insbesondere in Form eines Bremspedals bzw. einer Kupplungsbetätigungseinrichtung, eine von einem elektromotorischen Antrieb (M) angetriebene Druckversorgungseinrichtung (11) in Form einer Kolben- oder einer Doppelhubkolbenpumpe, wobei der Antrieb (M) direkt oder über ein Übersetzungsgetriebe, insbesondere ein Kugelumlaufgetriebe, den Kolben der Kolben- bzw. Doppelhubkolbenpumpe verstellt oder für eine Betätigungsvorrichtung nach einem der vorhergehenden Ausführungsbeispiele, dadurch gekennzeichnet, dass ein elastischer Biegestab (30) zwischen dem Antrieb (M) mit Kugelumlaufgetriebe und dem Kolben der Druckversorgungseinheit (11) angeordnet ist.

## Patentansprüche

1. Betätigungsvorrichtung für ein hydraulisches Betätigungssystem, insbesondere eine Kraftfahrzeugbremse oder einen elektrifizierten Kupplungs- und Gangsteller, folgende Komponenten aufweisend:
- einen Anschluss für eine Betätigungseinrichtung in Form eines Bremspedals oder einer Kupplungsbetätigungseinrichtung,
- eine von einem elektromotorischen Antrieb (M) angetriebene Druckversorgungseinrichtung (11) in Form einer Kolben- oder einer Doppelhubkolbenpumpe, wobei der Antrieb (M) direkt oder über ein Übersetzungsgetriebe, insbesondere ein Kugelumlaufgetriebe, den Kolben der Kolben- bzw. Doppelhubkolbenpumpe verstellt,
- eine mittels der Betätigungseinrichtung betätigbare Kolben-Zylinder-Einheit (10, THZ), die hydraulisch mit einem Druckmittelvorratsbehälter (VB) verbunden ist, und
- eine elektronische Steuer- und Regeleinheit (ECU),
**dadurch gekennzeichnet, dass**
ein Anschlusselement, insbesondere ein Stecker (1), in einer horizontalen Steckrichtung in die elektronische Steuer- und Regeleinheit (ECU) einsteckbar ist, wobei das Anschlusselement oberhalb der Kolben-Zylinder-Einheit (10, THZ) angeordnet ist und, wobei
das Anschlusselement oberhalb eines ersten Gehäuses (GH1) angeordnet ist, wobei die Kolben-Zylinder-Einheit (10, THZ) und der Kolben der Kolben- bzw. Doppelhubkolbenpumpe der Druckversorgungseinrichtung (11) im ersten Gehäuse (GH1) angeordnet sind.

2. Betätigungsvorrichtung nach Anspruch 1, **dadurch gekennzeichnet, dass** die horizontale Steckrichtung des Anschlusselements in horizontaler Richtung von einer Achse (H) der Kolben-Zylinder-Einheit (10, THZ) weg und zur elektronischen Steuer- und Regeleinheit (ECU) hin zeigt.

3. Betätigungsvorrichtung nach Anspruch 1 oder 2, **dadurch gekennzeichnet, dass** der elektromotorische Antrieb (M) unterhalb der Achse (H) der Kolben-Zylinder-Einheit (10, THZ) angeordnet ist.

4. Betätigungsvorrichtung nach Anspruch 1 oder 2, **dadurch gekennzeichnet, dass** der elektromotorische Antrieb (M) am ersten Gehäuse (GH1) befestigt und unterhalb der Achse (H) der Kolben-Zylinder-Einheit (10, THZ) angeordnet ist.

5. Betätigungsvorrichtung nach einem der vorhergehenden Ansprüche, **dadurch gekennzeichnet, dass** die horizontale Steckrichtung derart ausgewählt bzw. vorgesehen ist, dass diese zur einer Fahrzeugaußenseite und nicht in Richtung einer Fahrzeugmitte ausgerichtet ist.

6. Betätigungsvorrichtung nach einem der vorhergehenden Ansprüche, **dadurch gekennzeichnet, dass** das Anschlusselement oberhalb des elektromotorischen Antriebs (M) angeordnet ist.

7. Betätigungsvorrichtung nach einem der vorhergehenden Ansprüche, **dadurch gekennzeichnet, dass** sich der Druckmittelvorratsbehälter (VB) teilweise neben dem Anschlusselement erstreckt.

8. Betätigungsvorrichtung nach einem der vorhergehenden Ansprüche 1 bis 6, **dadurch gekennzeichnet, dass** sich der Druckmittelvorratsbehälter (VB) teilweise über und neben dem Anschlusselement und an der Hinterseite der Betätigungsvorrichtung erstreckt.

9. Betätigungsvorrichtung nach einem der vorhergehenden Ansprüche, **dadurch gekennzeichnet, dass** der Druckmittelvorratsbehälter (VB) in einem Bereich, insbesondere in einem Bereich des Anschlusselements, eine Aussparung für das Anschlusselement aufweist.

10. Betätigungsvorrichtung nach einem der vorhergehenden Ansprüche, **dadurch gekennzeichnet, dass** das Anschlusselement zum Anschluss an ein Bordnetz eines Fahrzeuges, seitlich neben der elektronischen Steuer- und Regeleinheit (ECU) oder stirnseitig an der elektronischen Steuer- und Regeleinheit (ECU), insbesondere teilweise unter einem Vorsprung der elektronischen Steuer- und Regeleinheit (ECU) und/oder dem Druckmittelvorratsbehälter (VB), angebracht ist.

11. Betätigungsvorrichtung nach einem der vorhergehenden Ansprüche, **dadurch gekennzeichnet, dass** ein Teil (2) der elektronischen Steuer- und Regeleinheit (ECU) oberhalb einer Ventilanordnung (HCU) und/oder des ersten Gehäuses (GH1) angeordnet ist.

12. Betätigungsvorrichtung nach Anspruch 11, **dadurch gekennzeichnet, dass** der Druckmittelvorratsbehälter (VB) oberhalb der Kolben-Zylinder-Einheit (10, THZ) und/oder oberhalb des Teils (2) der elektronischen Steuer- und Regeleinheit (ECU) angeordnet ist bzw. sich erstreckt.

13. Betätigungsvorrichtung nach einem der vorhergehenden Ansprüche, **dadurch gekennzeichnet, dass** sich ein Bereich (VB1) des Druckmittelvorratsbehälters (VB) seitlich nach unten neben dem ersten Gehäuse (GH1) erstreckt und der Bereich (VB1) hydraulische Anschlüsse zum Anschluss an Ein- und Auslasskanäle des ersten Gehäuses (GH1) aufweist.

14. Betätigungsvorrichtung nach Anspruch 1, **dadurch gekennzeichnet, dass** das Übersetzungsgetriebe ein Kugelumlaufgetriebe aufweist.
